# EUROPEAN PATENT APPLICATION

(11) **EP 4 796 360 A1**
(43) Date of publication of application: **26.08.2026**
(21) Application number: 24918613.1
(22) Date of filing: 26.09.2024
(51) Int. Cl.: B60K 13/02, B29C 65/14, F02M 35/104

(54) **MANIFOLD AND METHOD FOR MANUFACTURING MANIFOLD**

(30) Priority: 16.01.2024 JP 2024004665
(71) Applicant: AISIN CORPORATION, Kariya-shi, Aichi 448-8650 (JP)
(72) Inventor: HISAMATSU Tetsuya, Kariya-shi, Aichi 448-8650 (JP); ISHII Masato, Kariya-shi, Aichi 448-8650 (JP)
(74) Representative: Kramer Barske Schmidtchen Patentanwälte PartG mbB
(86) International application number: PCT/JP2024/034306
(87) International publication number: WO 2025/154325

(57) **Abstract**

A manifold includes: a first joined body that is formed on a resin first member; and a second joined body that is formed on a resin second member. Joining surfaces of the first joined body and the second joined body are integrated by thermal welding. A flow passage space is formed between the resin first member and the resin second member that have been integrated. A projecting portion extending from at least one of the first joined body and the second joined body toward the other is integrally formed at a position adjacent to a welded face of the first joined body and the second joined body.

## Description

### TECHNICAL FIELD

The present disclosure relates to a manifold and a method for manufacturing the manifold.

### BACKGROUND ART

In Patent Literature 1, a configuration is illustrated in which a retainer that holds a case and an instrument panel to which the retainer is to be attached are joined to each other by infrared welding. The configuration is described in which this infrared welding is performed in a state where a welding end surface (120c) of a rib (120b) of the retainer (in Patent Literature 1, reference sign 120 is used, and the same applies hereinafter) and a welding end surface (131d) of a rib (131c) of a panel base material (131) face each other in parallel, and the facing direction coincides with the direction of pressurization by relative movement at the time of assembling the retainer (120) and the panel base material (131).

### CITATIONS LIST

### PATENT LITERATURE

Patent Literature 1: JP 2018-167820 A

### SUMMARY OF INVENTION

### TECHNICAL PROBLEMS

When thermoplastic resin is thermally welded, a process of heating and melting a pair of joining surfaces facing each other, bringing the respective joining surfaces into contact with each other, and integrating the joining surfaces by the action of pressure is executed. In such a process, there is a temperature distribution in which the temperature of the outer edge portion of the pair of joining surfaces facing each other is lower than the temperature of the central portion thereof at the time of heating.

Due to such a temperature distribution, in a case where the pair of joining surfaces in the heated state are brought into pressure contact with each other, the amount of the resin at an outer end portion integrated by melting tends to be lower than that at the central portion, and the strength of the outer edge portion may be insufficient due to the shortage of the resin in a molten state. In a case where a portion having insufficient strength exists in part of a joined portion as described above, stress acting on the portion having insufficient strength increases, which may lead to breakage.

That is, a sufficient amount of resin in the molten state is mixed at the central portion of a welded face; however, at the outer edge portion of the welded face, the amount of resin in the molten state is smaller than that at the central portion and mixing is insufficient, resulting in insufficient strength. As described above, in a manifold in which two members are joined by thermal welding, there is a concern that a thermally welded portion may be broken.

For this reason, there is a demand for a manifold in which two members are firmly joined by thermal welding, and a method for manufacturing the manifold for firmly joining the two members by thermal welding.

### SOLUTIONS TO PROBLEMS

A characteristic configuration of a manifold according to the present disclosure is a manifold including: a first joined body that is formed on a resin first member; and a second joined body that is formed on a resin second member, in which joining surfaces of the first joined body and the second joined body are integrated by thermal welding, a flow passage space is formed between the resin first member and the resin second member that have been integrated, and a projecting portion extending from at least one of the first joined body and the second joined body toward the other is integrally formed at a position adjacent to a welded face of the first joined body and the second joined body.

According to the present configuration, when the first joined body and the second joined body are thermally welded, the projecting portion suppresses the flow of the resin in a molten state flowing in the direction from the central portion of the welded face toward the side where the projecting portion is formed, so that the amount of resin used for welding is increased even at a position away from the center of the welded face. In addition, since the flow of the resin in the molten state is suppressed by the projecting portion in this manner, the amount of resin in the molten state flowing in the direction from the central portion of the welded face toward the side where the projecting portion is not formed can also be increased, and the amount of resin used for welding is also increased. Therefore, the manifold in which the two members were firmly joined by thermal welding is configured.

Further, a method for manufacturing a manifold according to the present disclosure is a method for manufacturing the manifold described above, the method including: a heating step of heating the first joining surface and the second joining surface to a melting temperature by irradiation of infrared rays in a state where infrared rays acting on the projecting portion are blocked; and a welding step of welding the first joined body and the second joined body by pressure contact between the first joining surface and the second joining surface after the heating step.

According to the present configuration, in the heating step, the first joining surface and the second joining surface are heated to the melting temperature by infrared rays in a state where the projecting portion is not melted by infrared rays, and thereafter, the first joining surface and the second joining surface are brought into pressure contact with each other by the welding step. By this pressure contact, the resin in the molten state is mixed between the first joining surface and the second joining surface to reach a welded state. Furthermore, in this pressure contact, when the first joined body and the second joined body are thermally welded, the projecting portion suppresses the flow of the resin in the molten state flowing in the direction from the central portion of the welded face toward the side where the projecting portion is formed, so that the amount of resin used for welding is increased even at a position away from the center of the welded face. In addition, since the flow of the resin in the molten state is suppressed by the projecting portion in this manner, the amount of resin in the molten state flowing in the direction from the central portion of the welded face toward the side where the projecting portion is not formed can also be increased, and the amount of resin used for welding is also increased. Therefore, the method for manufacturing the manifold for firmly joining two members by thermal welding is configured.

### BRIEF DESCRIPTION OF DRAWINGS

FIG. 1 is an exploded perspective view of a manifold.
FIG. 2 is a bottom surface of an upper housing illustrating a lower opening.
FIG. 3 is a plan view of a lower housing illustrating an upper opening.
FIG. 4 is a cross-sectional view of the manifold.
FIG. 5 is a cross-sectional view of the upper housing and the lower housing in a separated state.
FIG. 6 is a cross-sectional view of an upper joining surface and a lower joining surface in a heating step.
FIG. 7 is a cross-sectional view of the upper joining surface and the lower joining surface in a welding step.
FIG. 8 is a cross-sectional view in a heating step according to another embodiment (a).
FIG. 9 is a cross-sectional view in a welding step according to the other embodiment (a).
FIG. 10 is a cross-sectional view in a heating step according to another embodiment (b).
FIG. 11 is a cross-sectional view in a welding step according to the other embodiment (b).

### DESCRIPTION OF EMBODIMENTS

Hereinafter, embodiments of a manifold according to the present disclosure will be described with reference to the drawings. In the present embodiment, as an example of the manifold, a manifold that controls a flow of cooling water in a vehicle is illustrated. However, the present disclosure is not limited to the following embodiments, and various modifications can be made without departing from the gist of the present invention.

### [Basic Configuration]

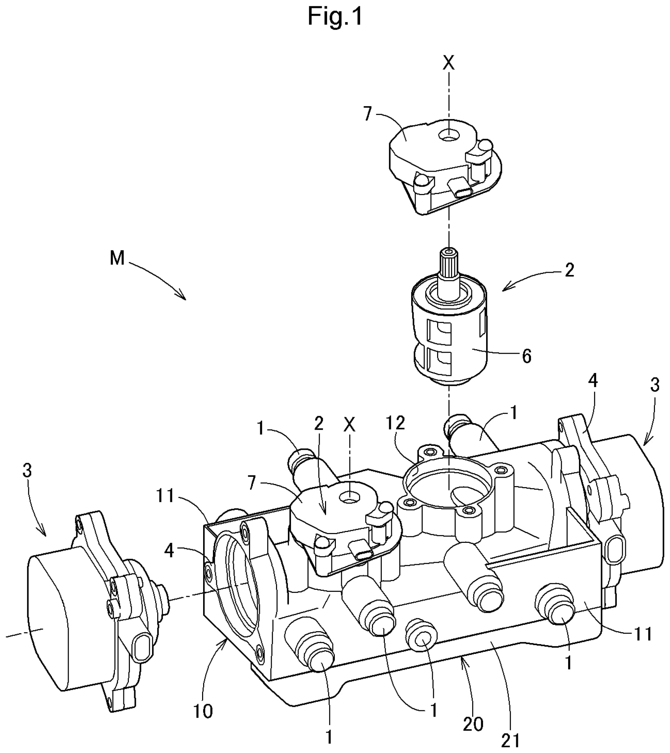

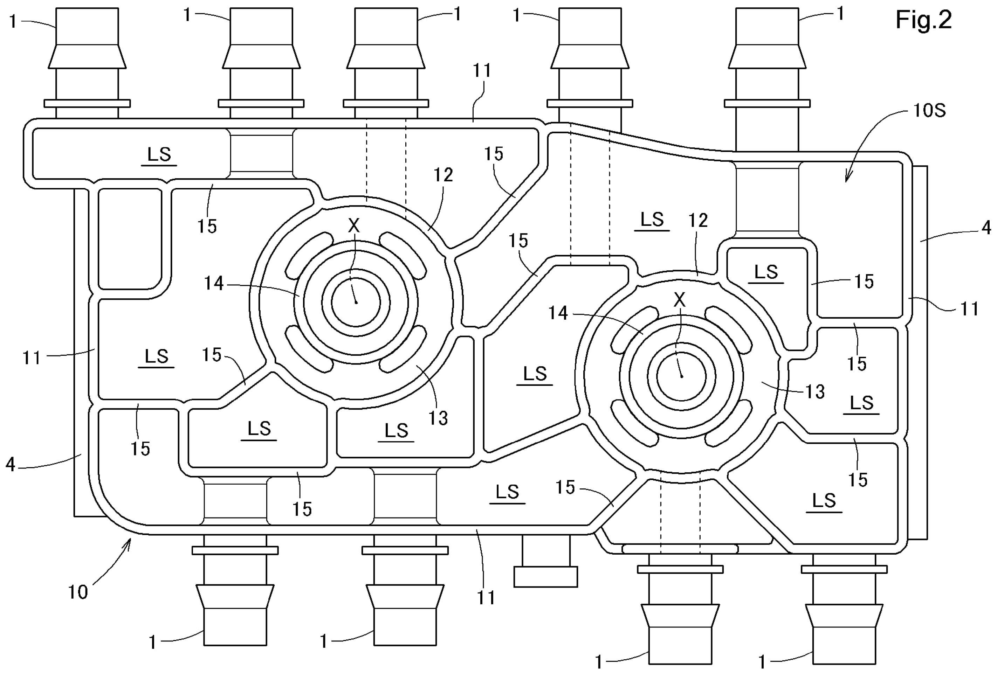

As illustrated in FIG. 1, a manifold M is configured which includes a plurality of tubular ports 1, a pair of valves 2, and a pair of pumps 3. In the manifold M, a plurality of flow passage spaces LS (see FIGS. 2 to 4) through which a fluid flows are formed.

The manifold M controls cooling water (hereinafter, sometimes referred to as "fluid") as a cooling medium flowing between cooling targets (not illustrated) such as a battery, an inverter, and a traveling motor and a heat dissipation unit (not illustrated) such as a radiator and a chiller that are mounted on an electric vehicle. Note that as the cooling water, for example, a long life coolant (LLC) containing ethylene glycol, propylene glycol, or the like is used.

In the manifold M, the pair of valves 2 and the pair of pumps 3 are independently controlled on the basis of signals from sensors such as a battery temperature sensor (not illustrated) that measures the temperature of the battery and a fluid temperature sensor (not illustrated) that measures the temperature of the fluid. By this control, a cooling target is selected and the cooling water is supplied thereto, and the flow rate of the cooling water with respect to the supply target is set.

Examples of the electric vehicle include a hybrid electric vehicle (HEV), a plug-in hybrid electric vehicle (PHEV), a battery electric vehicle (BEV), a fuel cell electric vehicle (FCEV), and the like.

### [Manifold]

The manifold M is provided in the electric vehicle in the posture illustrated in FIG. 1. In the following description, a vertical positional relationship will be described on the basis of this posture. Left and right end portions in the posture illustrated in FIG. 1 may be described as both end portions.

As illustrated in FIGS. 1 to 5, in the manifold M, a lower opening 10S of an upper housing 10 (an example of a first member) made of thermoplastic resin and an upper opening 20S of a lower housing 20 (an example of a second member) made of thermoplastic resin of the same material as that of the upper housing 10 are integrated by thermal welding to form a plurality of flow passage spaces LS therein.

The upper housing 10 (first member) and the lower housing 20 (second member) are molded products using a glass fiber reinforced thermoplastic resin. Note that the fiber used for reinforcement is not limited to glass fiber, and may be high-strength fiber such as carbon fiber. Thermal welding will be described later.

The pump 3 of the manifold M unitizes a pump motor and an impeller driven by the pump motor. The pumps 3 are inserted into holes at both end portions of the upper housing 10, and are connected and fixed to the upper housing 10 by flanges 4.

The pair of valves 2 each include a rotary type valve main body 6 housed in a tubular wall portion 12 on an upper surface of the upper housing 10 and a valve drive part 7 that controls the rotational posture of the valve main body 6.

The pair of valves 2 controls supply and discharge of the cooling water between the plurality of flow passage spaces LS and the plurality of tubular ports 1 as the valve main bodies 6 rotate about vertical valve axes X.

### [Upper Housing]

As illustrated in FIGS. 1 and 2, the upper housing 10 has a rectangular shape in plan view, a vertical wall portion 11 is formed in a region surrounding the outer periphery, and the plurality of tubular ports 1 protrude outward in a lateral posture so as to penetrate the vertical wall portion 11.

As illustrated in FIGS. 1 and 2, the upper housing 10 includes the tubular wall portion 12 formed in a cylindrical shape centered on the valve axis X, and a bottom plate 13 is integrally formed at a lower end portion of the tubular wall portion 12. The bottom plate 13 includes an annular portion 14 that is coaxial with the valve axis X on the bottom surface side.

The upper housing 10 includes a plurality of partition wall portions 15 connecting the vertical wall portion 11 and the tubular wall portions 12 so as to form the plurality of flow passage spaces LS between the vertical wall portion 11 and the tubular wall portions 12. Note that the valve main body 6 is inserted from the upper side of the tubular wall portion 12 and abuts on the bottom plate 13, so that the lower end position thereof is determined by the tubular wall portion 12.

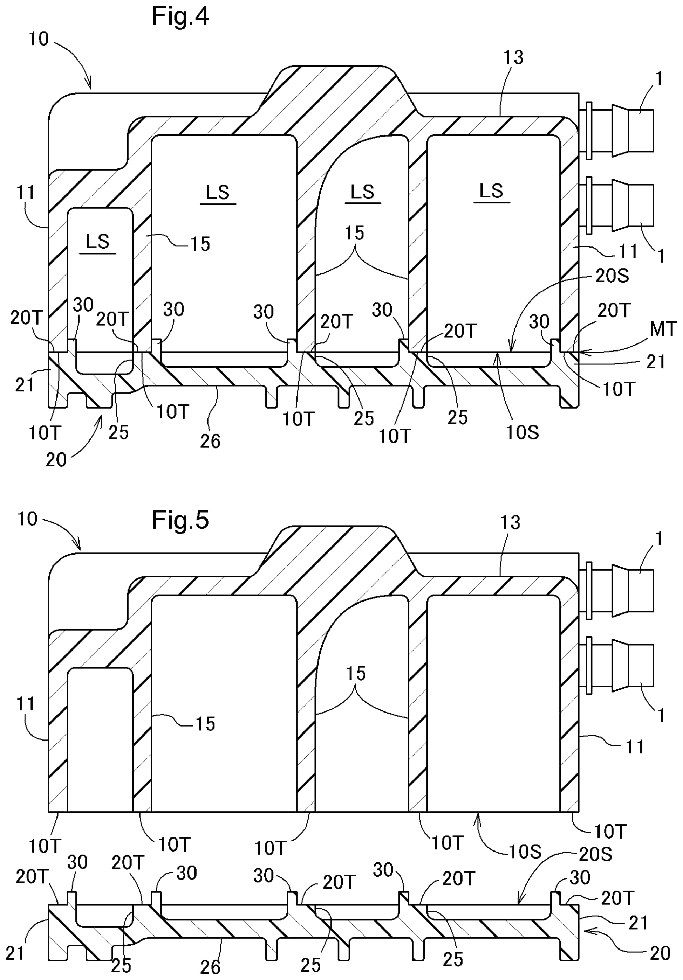

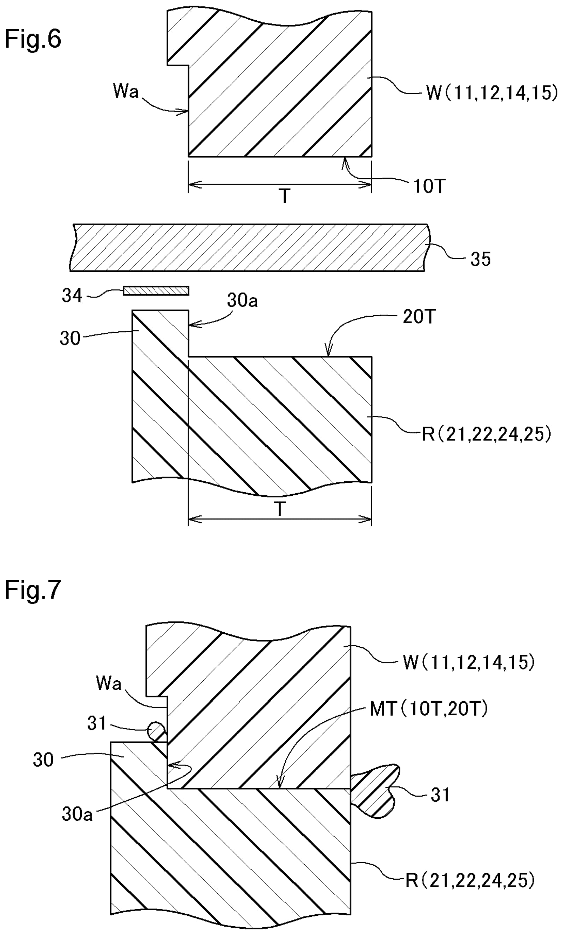

As illustrated in FIGS. 2 and 5, in the lower opening 10S of the upper housing 10, an upper joining surface 10T (an example of a first joining surface) is formed by the lower ends of the vertical wall portion 11, the tubular wall portions 12, the annular portions 14, and the partition wall portions 15. The upper joining surface 10T (first joining surface) is disposed on a single plane. In the following description, the vertical wall portion 11, the tubular wall portions 12, the annular portions 14, and the partition wall portions 15 may be collectively referred to as a wall body W (an example of a first joined body) (see FIG. 6).

On the upper joining surface 10T, the vertical wall portion 11, the tubular wall portion 12, the annular portion 14, and the partition wall portion 15 are formed to have the same width T. The direction along the width T may be referred to as a width direction.

### [Lower Housing]

As illustrated in FIGS. 1, 3, and 4, the lower housing 20 has a rectangular shape in plan view, and a vertical wall rib 21 surrounding the outer periphery and a bottom wall 26 are integrally formed.

The lower housing 20 includes tubular ribs 22, annular ribs 24, and a plurality of partition wall ribs 25 at positions facing the tubular wall portions 12, the annular portions 14, and the plurality of partition wall portions 15 of the upper housing 10, respectively, such that the tubular ribs 22, the annular ribs 24, and the plurality of partition wall ribs 25 protrude upward from the bottom wall 26.

As illustrated in FIGS. 5 and 6, in the upper opening 20S of the lower housing 20, a lower joining surface 20T (an example of a second joining surface) is formed by the upper ends of the vertical wall rib 21, the tubular ribs 22, the annular ribs 24, and the partition wall ribs 25. The lower joining surface 20T (second joining surface) is disposed on a single plane. In the following description, the vertical wall rib 21, the tubular ribs 22, the annular ribs 24, and the partition wall ribs 25 may be collectively referred to as a rib R (an example of a second joined body).

On the lower joining surface 20T, the vertical wall rib 21, the tubular rib 22, the annular rib 24, and the partition wall rib 25 are formed to have the same width T. The direction along the width T may be referred to as the width direction. In particular, the width T of the lower joining surface 20T and the width T of the upper joining surface 10T are set to be equal to each other.

Furthermore, in the present embodiment, a boundary portion in a stat where the upper joining surface 10T and the lower joining surface 20T are a thermally welded may be referred to as a welded face MT (see FIG. 7).

### [Welding Method]

As illustrated in FIGS. 4 and 5, in the manifold M, the upper joining surface 10T exposed to the lower opening 10S of the upper housing 10 is heated, the lower joining surface 20T exposed to the upper opening 20S of the lower housing 20 is heated, the upper joining surface 10T and the lower joining surface 20T are stacked and pressurized, thereby the upper housing 10 and the lower housing 20 are joined and integrated by thermal welding.

In this thermal welding, as illustrated in FIG. 6, the width T of the upper joining surface 10T and the width T of the lower joining surface 20T are in a positional relationship of completely overlapping each other. That is, the center of the upper joining surface 10T in the width direction and the center of the lower joining surface 20T in the width direction are in a positional relationship of matching each other.

In order to realize reliable welding, a projecting portion 30 in a non-molten state is provided in the vicinity of the welded face MT. The projecting portion 30 is formed in a posture rising from the welded face MT at a position continuous with at least one of the lower joining surface 20T or the upper joining surface 10T before welding is performed.

The projecting portion 30 is integrally formed with the rib R in a form having a vertical surface 30a protruding upward from the lower joining surface 20T of the rib R at a position continuous with the lower joining surface 20T. Furthermore, on a side surface of the wall body W (first joined body) corresponding to the projecting portion 30, a wall side surface Wa is formed in a posture along the vertical surface 30a of the projecting portion 30.

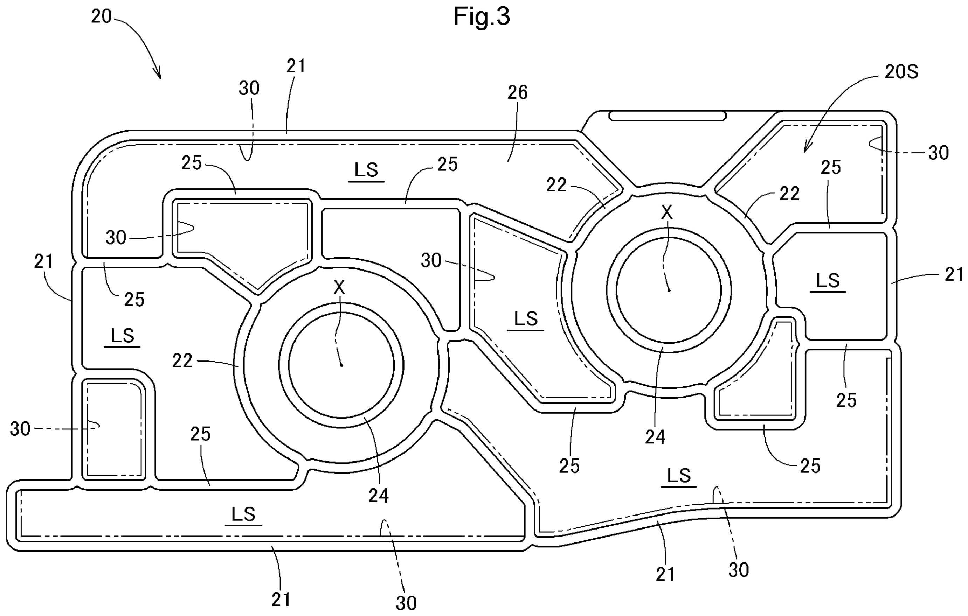

In the present embodiment, as illustrated in FIG. 3, the projecting portions 30 are formed partially (in regions indicated by two-dot chain lines) along the vertical wall rib 21, the tubular ribs 22, the annular ribs 24, and the partition wall ribs 25.

In a heating step, as illustrated in FIG. 6, a mask 34 as a jig is disposed at a position to block infrared rays from an infrared heater 35 so that the projecting portion 30 does not melt. Note that it is conceivable to use a ceramic material or the like having excellent heat resistance for the mask 34.

In the heating step, the upper joining surface 10T and the lower joining surface 20T are heated by being irradiated with infrared rays from the infrared heater 35 in a state where the mask 34 is disposed. After it is confirmed that the upper joining surface 10T and the lower joining surface 20T have exceeded the melting temperature of the resin by this heating, the infrared heater 35 and the mask 34 are separated, and in a welding step, the upper joining surface 10T and the lower joining surface 20T are brought into pressure contact with each other at an appropriate pressure.

Here, when the temperature distribution at the upper joining surface 10T and the lower joining surface 20T irradiated with infrared rays is observed, the temperature is the highest at the center in the width direction and the temperature is the lowest at an outer end position in the width direction.

For this reason, in a case where the upper joining surface 10T and the lower joining surface 20T are brought into pressure contact with each other, a sufficient amount of resin in a molten state is mixed at the center in the width direction of each joining surface, and favorable welding is performed.

On the other hand, since the amount of resin in the molten state (hereinafter, sometimes referred to as molten resin) at the outer end position in the width direction of the upper joining surface 10T and the lower joining surface 20T is smaller than that in the central position in the width direction, mixing of the resin is smaller than that in the center in the width direction, and the strength may be insufficient after welding.

In order to solve such a problem, the projecting portion 30 described above is formed at a position continuous with the lower joining surface 20T of the rib R.

In the welding step, as illustrated in FIG. 7, the upper joining surface 10T and the lower joining surface 20T in a heated state are brought into pressure contact with each other. In this welding step, in a case where the upper joining surface 10T and the lower joining surface 20T in the heated state are brought into pressure contact with each other, a force that causes the molten resin to flow outward in the width direction from the center in the width direction acts by the pressure.

Since the manifold M includes the projecting portion 30, part of the molten resin having flowed in the direction approaching the projecting portion 30 from the center of the welded face MT in the width direction comes into contact with the vertical surface 30a of the projecting portion 30, so that the flow velocity is reduced, and the molten resin is retained in the vicinity of the projecting portion 30. Due to this retention, an amount of molten resin sufficient for joining is mixed in a region closer to the projecting portion 30 than the center in the width direction of the welded face MT, and firm welding is realized.

Note that although part of the molten resin in contact with the vertical surface 30a flows through the gap between the vertical surface 30a and the wall side surface Wa, a large resistance acts on the resin flowing through the gap, and the retention state is not impaired. In a case where the resin reaches the upper end of the gap, a flash portion 31 is formed at the upper end of the gap.

In addition, since the molten resin in contact with the vertical surface 30a of the projecting portion 30 is retained, the amount of molten resin flowing from the center of the welded face MT to the region where the projecting portion 30 is not disposed also increases. For this reason, the amount of molten resin increases in the region of the welded face MT where the projecting portion 30 is not disposed, and an amount of molten resin sufficient for joining is mixed to achieve firm welding.

Note that part of the molten resin that has flowed in the direction away from the projecting portion 30 along a face where the welded face MT is formed flows out to form the flash portion 31 outside the welded face MT.

### [Operation and Effect of Embodiment]

As described above, only by forming the projecting portion 30 at the position continuous with the welded face MT where the two members, that is, the upper housing 10 and the lower housing 20 are joined by thermal welding, a sufficient amount of molten resin is supplied to the welded face, and firm thermal welding of the two members is realized. As a result, manufacture of the manifold M having high durability due to firm thermal welding is enabled.

In addition, since the projecting portion 30 is not melted at the time when the upper joining surface 10T and the lower joining surface 20T are brought into pressure contact with each other in the welding step, for example, by bringing the wall side surface Wa of the upper housing 10 (wall body W) into contact with the vertical surface 30a of the projecting portion 30, the projecting portion 30 can also be used as a guide, and highly accurate alignment is realized.

### [Other Embodiments]

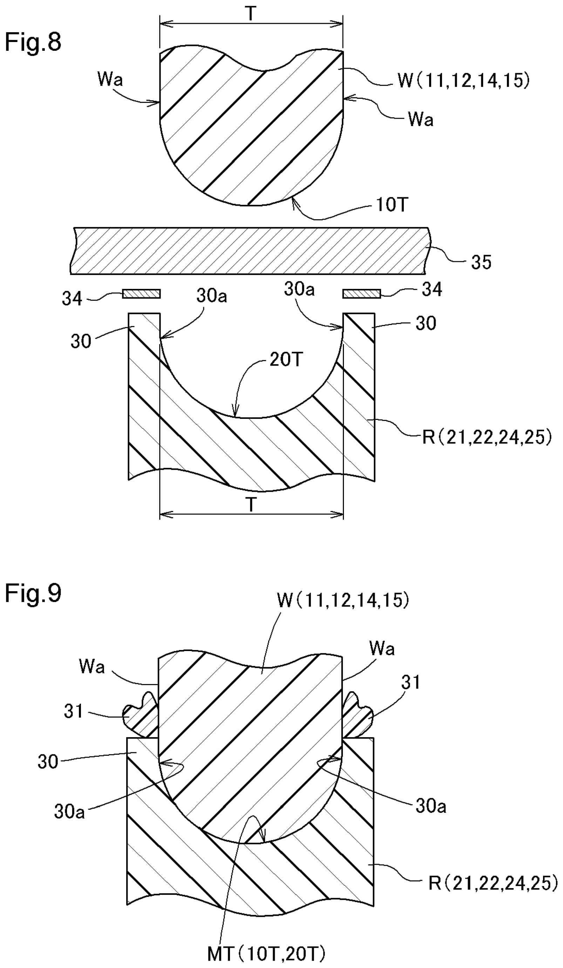

The present disclosure may be configured as follows in addition to the above-described embodiment (components having the same functions as those of the embodiment are denoted by the same numbers and reference signs as those of the embodiment).
(a) As illustrated in FIGS. 8 and 9, an upper joining surface 10T (first joining surface) of a wall body W (first joined body) is molded in a shape in which the center in the width direction protrudes in a semicircular shape, and a lower joining surface 20T (second joining surface) of a rib R (second joined body) is molded in a recessed shape in which the center in the width direction is recessed in a semicircular shape. In this configuration, the radius of the upper joining surface 10T and the radius of the lower joining surface 20T are set to the same value. In addition, in this configuration, a width T of the upper joining surface 10T and a width T of the lower joining surface 20T are set to the same value.

A projecting portion 30 is formed at each of both ends in the width direction of the lower joining surface 20T (second joining surface) so as to rise upward in a posture along the outer surface of the wall body W. Each of the pair of projecting portions 30 is formed at a position continuous with the lower joining surface 20T. Note that in the other embodiment (a), the pair of projecting portions 30 is formed in a posture rising from a welded face at the center of the lower joining surface 20T.

In the other embodiment (a), in a heating step illustrated in FIG. 8, a pair of masks 34 as jigs are disposed at positions to block infrared rays from an infrared heater 35 so that the projecting portions 30 do not melt. After it is confirmed that the upper joining surface 10T and the lower joining surface 20T have exceeded a melting temperature in this heating step, the upper joining surface 10T and the lower joining surface 20T are brought into pressure contact with each other at an appropriate pressure in a welding step as illustrated in FIG. 9.

In the welding step, since the projecting portions 30 are provided, in a case where the upper joining surface 10T and the lower joining surface 20T in a heated state are brought into pressure contact with each other, a force that causes resin in a molten state to flow outward in the width direction from the center in the width direction acts by the pressure.

The resin in the molten state flowing in this manner flows in the direction approaching the projecting portion 30 from the center in the width direction of the welded face MT, comes into contact with the projecting portion 30, so that the flow velocity is reduced, and the resin is retained in the vicinity of the projecting portion 30. As a result, a sufficient amount of resin in the molten state is mixed in a region closer to the projecting portion 30 than the center in the width direction of the welded face MT, and firm welding is realized.

Note that part of the resin in the molten state in contact with the projecting portion 30 flows through a gap between the projecting portion 30 and a wall side surface Wa, flows out from the upper end of the gap, and forms a flash portion 31 outside the welded face MT.

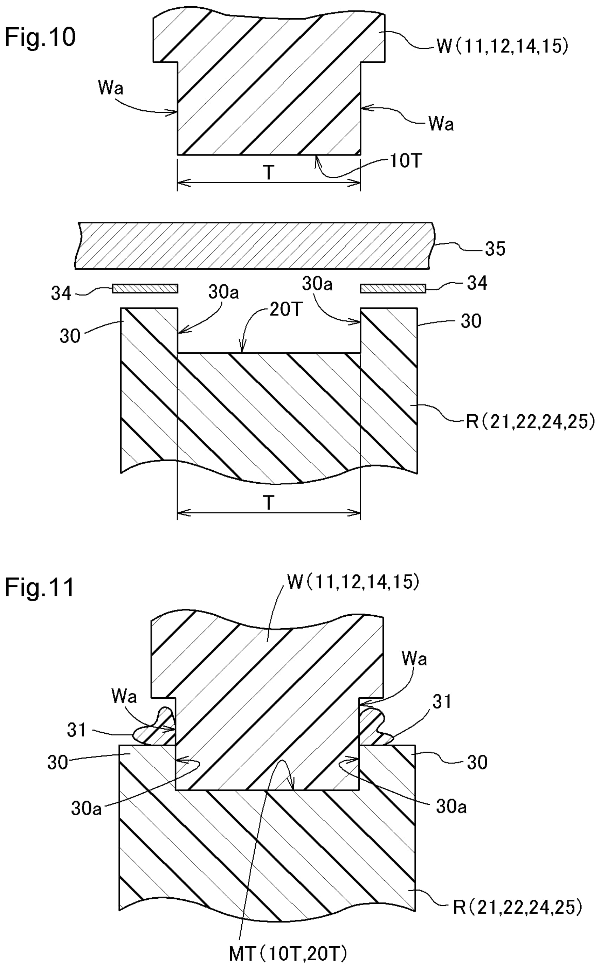

(b) As illustrated in FIGS. 10 and 11, an upper joining surface 10T (first joining surface) of a wall body W (first joined body) is formed flat, and a lower joining surface 20T (second joining surface) of a rib R (second joined body) is formed flat at a bottom portion of a recessed structure.

As a result, a projecting portion 30 is formed at each of both ends in the width direction of the lower joining surface 20T (second joining surface) so as to protrude upward in a posture along a wall side surface Wa of the wall body W. A vertical surface 30a of each of the pair of projecting portions 30 is formed at a position continuous with the lower joining surface 20T.

In the other embodiment (b), in a heating step illustrated in FIG. 10, a pair of masks 34 as jigs are disposed at positions to block infrared rays from an infrared heater 35 so that the projecting portions 30 do not melt. After it is confirmed that the upper joining surface 10T and the lower joining surface 20T have exceeded a melting temperature in this heating step, the upper joining surface 10T and the lower joining surface 20T are brought into pressure contact with each other at an appropriate pressure in a welding step as illustrated in FIG. 11.

In the welding step, since the projecting portions 30 are provided at both ends in the width direction of a welded face MT, in a case where the upper joining surface 10T and the lower joining surface 20T in a heated state are brought into pressure contact with each other, a force that causes resin in a molten state to flow outward in the width direction from the center in the width direction acts by the pressure.

Part of the resin in the molten state flowing in this manner that has flowed in the direction approaching the projecting portion 30 from the center in the width direction of the welded face MT comes into contact with the projecting portion 30, so that the flow velocity is reduced, and the resin is retained in the vicinity of the projecting portion 30. As a result, a sufficient amount of resin in the molten state is mixed in a region closer to the projecting portion 30 than the center in the width direction of the welded face MT, and firm welding is realized.

Note that part of the resin in the molten state in contact with the projecting portion 30 flows through a gap between a vertical surface 30a of the projecting portion 30 and the wall side surface Wa, flows out from the upper end of the gap, and forms a flash portion 31 outside the welded face MT.

(c) In the configurations of the above-described embodiment, the other embodiment (a), and the other embodiment (b), a configuration in which the positional relationship between the rib R and the wall body W is reversed upside down can also be implemented.

(d) A wall body W (first joined body) and a rib R (second joined body) each include a projecting portion 30.

A specific configuration of this configuration is a configuration in which the projecting portion 30 is provided on one side in a width direction of the wall body W (first joined body) and the projecting portion 30 is provided on the other side in the width direction of the rib R (second joined body). Even with such a configuration, with respect to each of the projecting portion 30 provided on the wall body W (first joined body) and the projecting portion 30 provided on the rib R (second joined body), the flow of molten resin is restricted by the projecting portion 30, whereby firm joining can be reliably performed.

(e) Projecting portions 30 do not need to be formed along all the regions where a vertical wall rib 21, tubular ribs 22, annular ribs 24, and partition wall ribs 25 constituting a lower housing 20 are formed, for example, and can be formed at a set interval in some regions, for example. Similarly, the projecting portions 30 can be formed at predetermined intervals in some regions along a vertical wall portion 11, tubular wall portions 12, annular portions 14, and partition wall portions 15 constituting an upper housing 10.

Note that the configuration disclosed in the above embodiments (including the other embodiments, the same applies hereinafter) can be applied in combination with the configuration disclosed in another embodiment as long as there is no contradiction, and the embodiments disclosed in the present specification are examples, and the embodiments of the present disclosure are not limited thereto, and can be appropriately modified without departing from the object of the present disclosure.

In the above-described embodiments, the following configurations are conceived.
(1) A manifold being a manifold M including: a first joined body (wall body W) that is formed on a resin first member (upper housing 10); and a second joined body (rib R) that is formed on a resin second member (lower housing 20), in which joining surfaces of the first joined body (wall body W) and the second joined body (rib R) are integrated by thermal welding, a flow passage space LS is formed between the resin first member (upper housing 10) and the resin second member (lower housing 20) that have been integrated, and a projecting portion 30 extending from at least one of the first joined body (wall body W) and the second joined body (rib R) toward the other is integrally formed at a position adjacent to a welded face MT of the first joined body (wall body W) and the second joined body (rib R).

According to this, in a state where the first joined body (wall body W) and the second joined body (rib R) are thermally welded to each other, at the position adjacent to the welded face MT of the first joined body (wall body W) and the second joined body (rib R), the projecting portion 30 in a non-molten state is provided so as to extend from at least one of the first joined body (wall body W) and the second joined body (rib R) toward the other. With such a configuration, when the first joined body (wall body W) and the second joined body (rib R) are thermally welded, the projecting portion 30 suppresses the flow of molten resin from a central portion to an outer edge portion of the welded face MT, and the inconvenience that the amount of resin used for welding decreases at the outer edge portion of the welded face MT is suppressed. As a result, firm connection is realized on the entirety of the welded face MT.

(2) In the manifold M of (1), it is preferable that the projecting portion 30 be positioned outside the welded face MT.

According to this, when the first joined body (wall body W) and the second joined body (rib R) are thermally welded, the projecting portion 30 at the outer end position of the flow of the molten resin suppresses the flow of the molten resin from the central portion to the outer edge portion of the welded face MT, thereby enabling firm welding.

(3) In the manifold M of (1), it is preferable that the projecting portion 30 be formed continuously with the welded face MT.

According to this, when the first joined body (wall body W) and the second joined body (rib R) are thermally welded, the projecting portion 30 at the position continuous with the welded face MT suppresses the flow of the molten resin on the welded face MT, thereby enabling firm welding.

(4) In the manifold M of (1), it is preferable that the projecting portion 30 be disposed at an end portion in a width direction of the welded face MT of one of the first joined body (wall body W) and the second joined body (rib R), and have a vertical surface 30a that rises from the welded face MT at a portion continuous with the welded face MT, and the other of the first joined body (wall body W) and the second joined body (rib R) have a wall side surface Wa that faces the vertical surface 30a.

According to this, in a case where the resin in a molten state flows on the welded face MT formed between the first joined body (wall body W) and the second joined body (rib R) in a direction of approaching the projecting portion 30 at the time of welding the welded face MT, the resin is retained between the first joined body (wall body W) and the second joined body (rib R) by coming into contact with the vertical surface 30a of the projecting portion 30. As a result, joining can be surely performed by the resin that is melted. In addition, even if a gap is formed between the vertical surface 30a and the wall side surface Wa facing the vertical surface 30a, a large resistance acts on the resin flowing through the gap, the outflow of the resin is suppressed, and the retention amount of the resin in the molten state is not reduced.

(5) In the manifold M of (1) to (4), it is preferable that a flash portion 31 be formed, the flash portion 31 being formed by molten resin having flowed out from an end portion in the width direction of the welded face MT where the projecting portion 30 is not disposed.

According to this, the molten resin on the welded face MT flows out from the end portion, the flow of the molten resin is restricted by the projecting portion 30, and the flash portion 31 is formed on the opposite side of the position where the projecting portion 30 is disposed. Therefore, it can be confirmed that the molten resin has flowed to the end portion in the width direction of the welded face MT.

(6) A method for manufacturing the manifold M according to any one of (1) to (5) preferably includes: a heating step of heating a first joining surface (upper joining surface 10T) of the resin first member (upper housing 10) and a second joining surface (lower joining surface 20T) of the resin second member (lower housing 20) to a melting temperature by irradiation of infrared rays in a state where infrared rays acting on the projecting portion 30 are blocked; and a welding step of welding the resin first member (upper housing 10) and the resin second member (lower housing 20) by pressure contact between the first joining surface (upper joining surface 10T) and the second joining surface (lower joining surface 20T) after the heating step.

According to this, in the heating step, the first joining surface (the upper joining surface 10T) and the second joining surface (the lower joining surface 20T) are heated to the melting temperature in a state where the projecting portion 30 is not melted, and in the welding step, the first joining surface (the upper joining surface 10T) of the first member (the upper housing 10) and the second joining surface (the lower joining surface 20T) of the second member (the lower housing 20) are brought into pressure contact with each other, so that reliable joining can be performed in a state where the projecting portion 30 retains the molten resin.

### INDUSTRIAL APPLICABILITY

The present disclosure can be used for a manifold and a method for manufacturing the manifold.

### REFERENCE SIGNS LIST

10: Upper housing (First member), 10T: Upper joining surface (First joining surface), 20: Lower housing (Second member), 20T: Lower welded face (Second joining surface), 30: Projecting portion, 30a: Vertical surface, 31: Flash portion, LS: Flow passage space, M: Manifold, MT: Welded face, R: Rib (Second joined body), W: Wall body (First joined body), and Wa: Wall side surface

## Claims

1. A manifold comprising: a first joined body that is formed on a resin first member; and a second joined body that is formed on a resin second member, wherein joining surfaces of the first joined body and the second joined body are integrated by thermal welding, a flow passage space is formed between the resin first member and the resin second member that have been integrated, and
a projecting portion extending from at least one of the first joined body and the second joined body toward another of the first joined body and the second joined body is integrally formed at a position adjacent to a welded face of the first joined body and the second joined body.

2. The manifold according to claim 1, wherein the projecting portion is positioned outside the welded face.

3. The manifold according to claim 1, wherein the projecting portion is formed continuously with the welded face.

4. The manifold according to claim 1, wherein the projecting portion is disposed at an end portion in a width direction of the welded face of one of the first joined body and the second joined body, and has a vertical surface that rises from the welded face at a portion continuous with the welded face, and
another of the first joined body and the second joined body has a wall side surface that faces the vertical surface.

5. The manifold according to claim 4, wherein a flash portion is formed, the flash portion being formed by molten resin having flowed out from an end portion in the width direction of the welded face where the projecting portion is not disposed.

6. A method for manufacturing the manifold according to any one of claims 1 to 5, the method comprising:
a heating step of heating a first joining surface of the resin first member and a second joining surface of the resin second member to a melting temperature by irradiation of infrared rays in a state where infrared rays acting on the projecting portion are blocked; and
a welding step of welding the resin first member and the resin second member by pressure contact between the first joining surface and the second joining surface after the heating step.
